# FASCICULE DE BREVET EUROPEEN

(11) **EP 1 857 684 B1**
(45) Date de publication et mention de la délivrance du brevet: **13.01.2010**
(21) Numéro de dépôt: 07290591.2
(22) Date de dépôt: 10.05.2007
(51) Int. Cl.: F15B 13/04, F16K 11/07, F16K 27/02, F15B 13/00

(54) **Agencement de distributeur hydraulique sous forme de cartouche**
Hydraulische Ventilanordnung in Form einer Patrone
Arrangement of a hydraulic valve in the form of a cartridge

(30) Priorité: 17.05.2006 FR 0604432
(43) Date de publication de la demande: 21.11.2007
(73) Titulaire: MESSIER-BUGATTI, 78140 Vélizy Villacoublay (FR)
(72) Inventeur: Collet, Olivier, 91120 Palaiseau (FR); Fremiot, Sébastien, 92100 Boulogne Billancourt (FR); Treyz, Alain, 92160 Antony (FR); Aubault, Olivier, 91380 Chilly-Mazarin (FR)
(74) Mandataire: Parzy, Benjamin Alain

(56) Documents cités:
- DE-U1- 20 109 689
- US-A- 4 741 364
- US-A- 4 936 339
- US-A1- 2002 043 287
- US-B1- 6 182 697

## Description

L'invention concerne un agencement de distributeur hydraulique sous forme de cartouche destinée à être inséré notamment dans un bloc hydraulique.

### ARRIERE-PLAN DE L'INVENTION

On connaît, notamment dans le domaine aéronautique, des distributeurs hydrauliques comportant des ports d'entrée et des ports de sortie, et des moyens de distribution pour mettre sélectivement en communication des ports d'entrée avec les ports de sortie selon au moins deux circuits de connexion.

Ces distributeurs hydrauliques sont notamment utilisés pour commander la descente et le relevage des atterrisseurs, selon une séquence déterminée.

En général, les distributeurs hydrauliques sont insérés dans des blocs distributeurs reçus sur des plaques support séparées reliées par des tuyauteries associées au circuit hydraulique de l'aéronef et comportant des moyens d'interfaçage mécanique et hydraulique avec les blocs distributeurs.

En cas de défaillance d'un bloc distributeur hydraulique, celui-ci est traditionnellement considéré comme un organe remplaçable en ligne (organe LRU ou "line replaceable unit" pour les anglo-saxons) de sorte qu'il peut être démonté par le personnel de maintenance au sol et remplacé par un bloc distributeur valide.

Il apparaît que, pour la fonction de des-cente/relevage des atterrisseurs, le nombre de distributeurs hydrauliques peut être important. On a bien pensé à regrouper toutes les plaques support séparées en une plaque support unique qui reçoit donc tous les blocs distributeurs hydrauliques, mais une telle solution s'avère lourde. On a également pensé à intégrer complètement les distributeurs hydrauliques dans un unique bloc hydraulique, sans possibilité de remplacement "en ligne" des distributeurs hydrauliques. Cette solution, bien que techniquement envisageable, n'est pas compatible avec une exploitation économique de l'aéronef. En effet, la défaillance de l'un des distributeurs hydrauliques obligerait à remplacer le bloc hydraulique dans son intégralité, ce qui est peu satisfaisant.

Un ensemble de distributeur hydraulique et de corps selon le préambule de la revendication 1 est connu de US 6 182 697 B1.

### OBJET DE L'INVENTION

Il apparaît un besoin pour des composants hydrauliques permettant une architecture hydraulique compacte et légère, et dont la maintenance reste néanmoins possible sur aéronef.

### BREVE DESCRIPTION DE L'INVENTION

En vue de la réalisation de ce but, on propose un ensemble de distributeur hydraulique et de corps destiné à recevoir au moins un distributeur hydraulique, le distributeur hydraulique comportant des orifices de distribution et des moyens de distribution pour mettre sélectivement en communication hydraulique les orifices de distribution, dans lequel le distributeur hydraulique se présente sous la forme d'une cartouche oblongue, le corps comportant un logement débouchant adapté à recevoir le distributeur hydraulique de façon démontable de sorte que, lorsque le distributeur hydraulique est en place dans le logement, le distributeur et le logement définissent des chambres hydrauliquement isolées dans lesquelles débouchent les orifices de distribution du distributeur hydraulique.

Il suffit de prévoir sur le corps des ports hydrauliques débouchant dans les chambres pour obtenir un ensemble de distribution hydraulique adapté à relier sélectivement des ports hydrauliques entre eux.

Ainsi, le distributeur est intégré au corps tout en restant facilement démontable: il suffit de le retirer du logement, sans aucune déconnexion hydraulique.

### BREVE DESCRIPTION DES DESSINS

L'invention sera mieux comprise à la lumière de la description qui suit en référence aux figures des dessins annexés parmi lesquelles :
- la figure 1 est une vue en perspective d'un bloc hydraulique recevant au moins un distributeur hydraulique selon l'invention ;
- la figure 2 est une vue en coupe longitudinale du distributeur hydraulique de la figure 1, en place dans son étui protecteur ;
- la figure 3 est une vue en coupe longitudinale du distributeur hydraulique de la figure 1, lors de sa mise en place dans le bloc hydraulique ;
- la figure 4 est une vue analogue à celle de la figure 3, illustrant une étape ultérieure de la mise en place du distributeur hydraulique dans le bloc hydraulique;
- la figure 5 est une vue analogue aux figures 3 et 4, illustrant le distributeur hydraulique en place dans le bloc hydraulique.

### DESCRIPTION DETAILLEE DE L'INVENTION

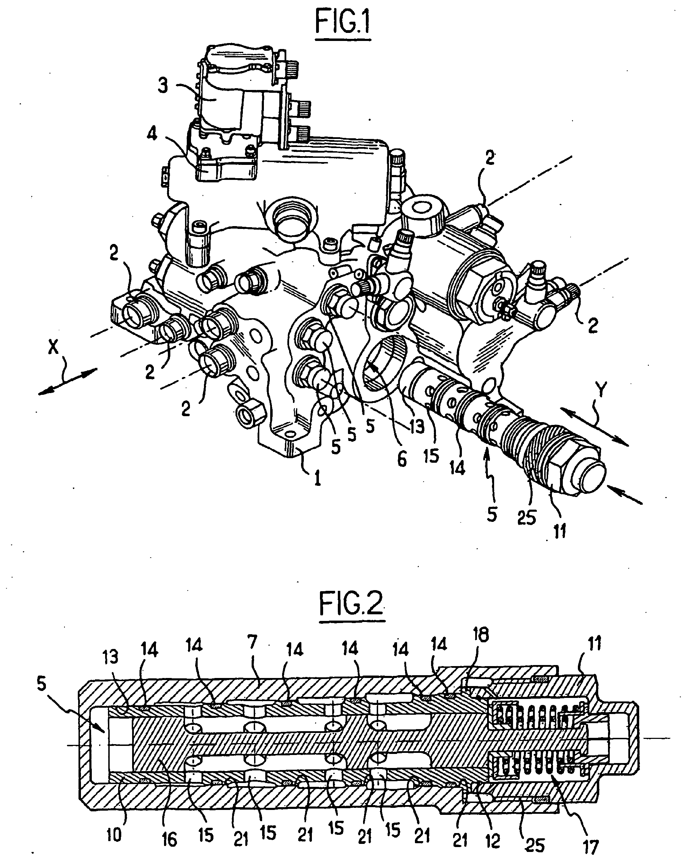

En référence à la figure 1, l'invention est ici illustrée en application à un bloc hydraulique 1 servant à la commande d'extension et de rétraction d'atterrisseurs d'aéronef. Le bloc hydraulique 1 comporte plusieurs ports hydrauliques 2, dont des ports d'entrée et des ports de sortie.

Le bloc hydraulique 1 comporte ici plusieurs distributeurs hydrauliques pour mettre en communication sélective certains des ports d'entrée avec certains des ports de sortie. On distingue sur le dessus du bloc hydraulique 1 un distributeur hydraulique classique 3, comportant ses propres ports hydrauliques, et relié au bloc hydraulique 1 par l'intermédiaire d'un bloc hydraulique 4 formant plaque support qui est rapporté sur le bloc hydraulique 1. Ce distributeur, de type connu en soi, sert de vanne de sécurité pour la mise au retour du bloc hydraulique, en cas d'incident lors de la séquence de manoeuvre des atterrisseurs.

L'invention a pour objet un distributeur hydraulique en cartouche oblongue 5 (l'un d'eux est illustré ici sorti du bloc hydraulique 1), destiné à être reçu dans un logement borgne débouchant 6 du bloc hydraulique 1. Ici, le bloc hydraulique 1 comporte plusieurs distributeurs hydrauliques en cartouche 5.

Comme cela est visible à la figure 2, sur laquelle le distributeur hydraulique en cartouche 5 est représenté muni de son étui protecteur 7, le distributeur hydraulique en cartouche 5 comporte une chemise 10 ayant une première extrémité qui porte un écrou de fixation 11 borgne muni d'un filetage extérieur 25. L'écrou 11 est solidarisé à la chemise 10 par un jonc 12 de sorte que l'écrou 11 est libre en rotation vis à vis de la chemise 10. La chemise 10 comporte une seconde extrémité formant une portée de centrage 13.

Entre les deux extrémités, la chemise 10 porte sur sa surface externe des joints d'étanchéité 14 longitudinalement espacés qui ont des diamètres qui diminuent depuis la première extrémité vers jusqu'à la deuxième extrémité de la chemise 10. La chemise 10 comporte un certain nombre d'orifices 15, réalisés entre les joints d'étanchéité 14.

Un tiroir 16 est monté pour coulisser dans la chemise 10 et est maintenu dans la position neutre (illustrée ici) par un organe de positionnement élastique 17 tel qu'un double ressort. Le déplacement axial du tiroir 16 à l'encontre de l'organe de positionnement élastique 17 de part et d'autre de la position neutre permet de mettre sélectivement en communication entre eux des orifices 15 s'étendant de part et d'autre de joints d'étanchéité 14. L'organe de positionnement élastique 17 prend appui d'un côté sur l'extrémité de la chemise 10 et de l'autre côté sur un épaulement de l'écrou 11.

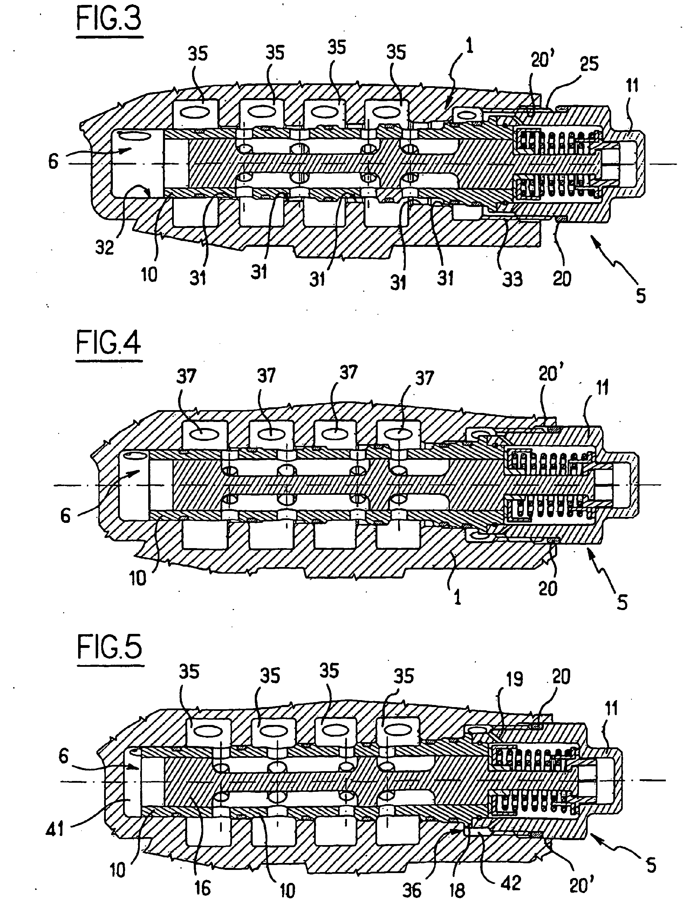

La mise en place du distributeur hydraulique 5 dans le logement 6 du bloc hydraulique 1 va être maintenant détaillée en référence aux figures 3 à 5.

Le logement 6 définit un certain nombre de portées d'étanchéité 31 destinées à coopérer avec les joints d'étanchéité 14. Les portées 31 ont un diamètre qui diminue depuis l'entrée du logement 6 jusqu'au fond de celui-ci, de sorte que les portées 31 sont étagées. Le fond du logement 6 présente une portée de centrage 32 destinée à coopérer avec la portée de centrage 13 de la chemise 10, d'un diamètre plus petit que les diamètres des portées d'étanchéité 31.

On enfile le distributeur hydraulique 5 dans le logement 6 jusqu'à ce que la portée de centrage 13 de la chemise 10 coopère avec la portée de centrage 32 homologue du logement 6. Ce faisant, certains des joints d'étanchéité 14 passent sous certaines des portées d'étanchéité 31. L'étagement des portées 31 empêche justement les joints d'étanchéité 14 d'être alors abîmés au passage de ces portées 31 qui sont de diamètres supérieurs.

Puis, guidé par la coopération des portées de centrage 13, 32, on continue d'enfoncer le distributeur hydraulique en cartouche 5 jusqu'à ce que le filetage de l'écrou 11 vienne en butée contre l'entrée d'un taraudage 33 homologue réalisé à l'entrée du logement 6, sans être encore engagé dans celui-ci, comme illustré à la figure 3. On remarquera que dans cette position, aucun des joints d'étanchéité 14 n'est encore engagé sous la portée 31 avec laquelle il doit coopérer.

Puis on visse l'écrou 11. Le vissage permet la mise en place progressive du distributeur hydraulique en cartouche 5 dans le logement 6, en provoquant l'engagement des joints 14 sous les portées 31. Lorsque les joints d'étanchéité 14 arrivent en contact avec les portées d'étanchéité 31, l'écrou 11 est quant à lui suffisamment engagé pour pouvoir exercer l'effort d'engagement desdits joints sur leurs portées respectives. On distingue sur la figure 4 la position du distributeur hydraulique en cartouche 5 pour lequel les joints d'étanchéité 14 commencent justement à être engagés sous les portées 31.

L'effort d'engagement peut être important, en raison du grand nombre de joints d'étanchéité 14 (ici les six joints 14 et un joint supplémentaire 20 associé à l'écrou 11). L'exercice d'un tel effort d'engagement est facilité par la démultiplication apportée par la liaison hélicoïdale entre l'écrou 11 du distributeur hydraulique 5 et le bloc hydraulique 1, de sorte qu'un couple de vissage raisonnable permet d'exercer un effort d'engagement important. A cet effet, le jonc 12 autorise une rotation de l'écrou 11 alors que la chemise 10 reste immobile en rotation, ce qui facilite l'engagement des joints 14 sous les portées 31 et évite l'endommagement desdits joints par rotation.

On continue le vissage jusqu'à ce que, comme illustré à la figure 5, une collerette 18 de la chemise 10 prévue à cet effet vienne en butée contre un épaulement associé 36 du logement 6 et soit pincée entre ledit épaulement 36 et l'écrou 11. Dans cette position, les joints d'étanchéité 14 s'étendent sous leurs portées 31 respectives, ce qui définit, entre le distributeur et le logement, des chambres 35 hydrauliquement isolées par les joints d'étanchéité 14. Dans chacune de ces chambres 35 débouchent des conduits 37 (référencés sur la figure 4) reliant lesdites chambres aux ports hydrauliques 2 du bloc hydraulique 1. Les chambres 35, et donc les ports hydrauliques associés sont sélectivement mis en communication hydraulique par l'intermédiaire d'un chemin hydraulique s'étendant dans le distributeur hydraulique en cartouche 5 entre des orifices 15 débouchant dans l'une ou l'autre des chambres 35.

On remarquera que le joint d'étanchéité 14 qui est le plus proche de la deuxième extrémité de la chemise 10 coopère avec la portée de centrage 32, de sorte que celle-ci forme également une portée d'étanchéité.

Selon un aspect particulier de l'invention, et comme cela est visible sur la figure 5, les joints d'étanchéité 14 les plus proches des extrémités de la chemise 10 définissent dans le bloc hydraulique 1:
- une première chambre de pilotage 41 dans le fond du logement 6 dans laquelle débouche un conduit relié à un port hydraulique de pilotage pour déplacer le tiroir 16 à l'encontre de l'organe de positionnement élastique 17. A cet effet, l'extrémité de la chemise 10 est ouverte de sorte que la pression régnant dans la première chambre de pilotage 41 agit directement sur l'extrémité du tiroir 16 formant piston;
- une deuxième chambre de pilotage 42 reliée à un port hydraulique de pilotage pour déplacer le tiroir 16 à l'encontre de l'organe de positionnement élastique 17 dans une direction opposée. A cet effet, la pression régnant dans la deuxième chambre de pilotage 42 est transmise à l'intérieur de l'écrou 11 par des orifices 19 pour agir directement sur l'autre extrémité du tiroir 16 formant piston. L'étanchéité de la deuxième chambre de pilotage 42 est assurée par un joint d'étanchéité 20 disposé au voisinage du filetage de l'écrou 11, ici en arrière de celui-ci, et coopérant avec une portée homologue 20' prévue en entrée du logement 6.

Pour démonter le distributeur hydraulique en cartouche 5, il suffit de le dévisser et de le retirer du logement. Ainsi, le distributeur hydraulique en cartouche de l'invention peut être mis en place et démonté sans aucune déconnexion hydraulique, ni besoin d'un quelconque outillage spécifique.

Selon un aspect particulier de l'invention, le distributeur hydraulique en cartouche 5, lorsqu'il n'est pas monté dans un bloc hydraulique, est stocké dans un étui protecteur 7, tel qu'illustré à la figure 2. L'étui protecteur définit un logement à l'entrée duquel s'étend un taraudage pour coopérer avec le filetage de l'écrou 11.

L'étui protecteur 7 est partiellement rempli de fluide hydraulique et comporte, de la même façon que le logement 6 du bloc hydraulique 1, des portées d'étanchéité 21 destinées à coopérer avec les joints d'étanchéité 14 lorsque le distributeur hydraulique en cartouche 5 est en place dans l'étui protecteur 7. Ainsi, les joints d'étanchéité 14 sont précompressés par les portées 21 de l'étui protecteur 7, de sorte que, lorsque l'on sort le distributeur hydraulique en cartouche 5 de l'étui protecteur 7 pour le mettre en place dans le logement 6 du bloc hydraulique 1, les joints d'étanchéité 14 n'ont pas le temps de reprendre leur forme initiale, ce qui facilite l'engagement desdits joints d'étanchéité sous les portées d'étanchéité 31 du logement 6.

Selon un autre aspect de l'invention, on constate à la figure 1 que les ports hydrauliques 2 s'étendent selon une première direction X dans le prolongement des conduits 37 associés (que l'on voit déboucher dans les chambres 35 aux figures 3 à 5), tandis que les distributeurs hydrauliques à cartouche 5 et les logements 6 associés s'étendent selon une direction Y perpendiculaire à la direction X, ce qui facilite considérablement la conception du bloc hydraulique.

L'invention n'est pas limitée à ce qui vient d'être décrit, mais bien au contraire englobe toute variante entrant dans le cadre défini par les revendications.

En particulier, bien que l'on ait décrit ici un distributeur comportant des moyens de distribution du type à tiroir, l'invention est applicable à d'autres types de distributeurs, comme des distributeurs à clapets.

Bien que le distributeur et le bloc hydraulique délimitent ici deux chambres de pilotage, on pourra réaliser un distributeur ne comportant qu'une seule chambre de pilotage.

Plus généralement, bien que l'on ait indiqué que le distributeur hydraulique en cartouche est destiné à être reçu dans le logement d'un bloc hydraulique ou d'un étui protecteur, on pourra mettre en place le distributeur dans tout corps comportant un logement adapté.

## Revendications

1. Ensemble de distributeur hydraulique et de corps (1,7) comportant au moins un logement débouchant (6) destiné à recevoir au moins un distributeur hydraulique (5), dans lequel le distributeur hydraulique (5) :
- comporte des orifices de distribution (15) et des moyens de distribution (16, 17) pour mettre sélectivement en communication hydraulique les orifices de distribution (15),
- a une forme générale de cartouche oblongue adaptée à être reçue de façon démontable dans le logement (6) de sorte que le distributeur et le logement définissent des chambres (35) hydrauliquement isolées dans lesquelles débouchent les orifices de distribution (15) du distributeur hydraulique ;
- porte des joints d'étanchéité (14) longitudinalement espacés coopérant avec des portées d'étanchéité (31) du logement lorsque le distributeur hydraulique est en place dans ledit logement, les chambres (35) s'étendant entre les joints d'étanchéité, et les portées d'étanchéité et les joints d'étanchéité (31 ; 14) ayant des diamètres étagés qui diminuent d'une entrée du logement à un fond du logement (6) ;
**caractérisé en ce que** le distributeur comporte une extrémité par laquelle il est introduit dans le logement qui comporte une portée de centrage (13) coopérant avec une portée de centrage (32) homologue s'étendant au fond du logement (6) pour centrer le distributeur hydraulique dans le logement lors de sa mise en place, lesdites portées de centrage étant disposées de façon à coopérer entre elles avant que les joints ne portent sur les portées d'étanchéité.

2. Ensemble selon la revendication 1, dans lequel le distributeur hydraulique comporte une autre extrémité portant des moyens de fixation (11) du distributeur hydraulique dans le logement (6) du corps.

3. Ensemble selon la revendication 2, dans lequel les moyens de fixation comportent un écrou (11) qui est monté tournant sur une chemise (10) du distributeur hydraulique, et qui comporte un filetage (25) adapté à coopérer avec un taraudage (33) s'étendant en entrée du logement (6).

4. Ensemble selon la revendication 3, dans lequel le distributeur est agencé de sorte que, lorsque le filetage (25) est en butée contre le taraudage (33) sans y être engagé, les joints d'étanchéité (14) ne portent pas encore sur les portées d'étanchéité (31) du logement, mais les portées de centrage (13,32) coopèrent pour centrer le distributeur hydraulique dans le logement (6).

5. Ensemble selon la revendication 4, dans lequel, une fois le filetage (25) engagé dans le taraudage (33) et lorsque les joints d'étanchéité (14) arrivent en contact avec les portées d'étanchéité (31), l'écrou (11) est suffisamment engagé pour pouvoir exercer l'effort d'engagement desdits joints sur leurs portées respectives.

6. Ensemble selon la revendication 3, dans lequel la chemise (10) comporte une collerette (18) qui s'étend immédiatement en regard de l'écrou (11) de façon à être pincée entre ledit écrou et un épaulement (36) du logement (6) lorsque le distributeur est en place dans le logement.

7. Ensemble selon la revendication 3, dans lequel l'écrou (11) porte un joint d'étanchéité (20) disposé au voisinage du filetage (25) et destiné à porter sur une portée d'entrée (20') du logement.

8. Ensemble selon l'une des revendications 1 à 7, dans lequel le corps est un bloc hydraulique (1) comportant des ports hydrauliques (2) associés à des conduits (37) qui débouchent dans les chambres (35).

9. Ensemble selon la revendication 8, dans lequel le distributeur hydraulique (5) et le logement associé (6) s'étendent dans le bloc hydraulique (1) selon une première direction (y), tandis que les conduits (37) s'étendent selon une deuxième direction (x) perpendiculaire à la première.

10. Ensemble selon l'une des revendications 1 à 7, dans lequel le corps est un étui de protection (7) du distributeur hydraulique (5).

## Claims

1. An assembly comprising at least one hydraulic control valve and a body (1,7)including at least one open housing (6) for receiving said hydraulic control valve (5), in which the hydraulic control valve :
- comprises flow orifices (15) and flow control means (16, 17) for putting the flow orifices (15) selectively into hydraulic communication with one another;
- is in the form of an oblong cartridge adapted to be received in the open housing (6) in removable manner such that when the hydraulic control valve is in place in the housing, the hydraulic control valve and the housing together define isolated hydraulic chambers (35) into which the flow orifices (15) of the hydraulic control valve open out ;
- carries sealing gaskets (14) that are longitudinally spaced apart cooperating with sealing bearing surfaces (31) of the housing (6) when the hydraulic control valve is in place in said housing, the chambers (35) extending between the sealing gaskets, the sealing bearing surfaces and gaskets (31; 14) housing stepped diameters that decrease going from an inlet to the housing towards an end wall of the housing (6);
- **characterized in that** the control valve has an end by which it is introduced into the housing that includes a centering bearing surface (13) for co-operating with a complementary centering bearing surface (32) extending at the end of the housing (6) for centering the control valve into the housing when introduced, the bearing surfaces being disposed to cooperate therebetween before the sealing gaskets engage the sealing bearing surfaces.

2. An assembly according to claim 1, in which the hydraulic control valve has an other end carrying fastener means (11) for fastening the hydraulic control valve in the housing (6) of the body.

3. An assembly according to claim 2, in which the fastener means comprise a nut (11) mounted to rotate on a jacket (10) of the hydraulic control valve, and including a thread (25) to co-operate with tapping (33) extending at the inlet to the housing (6).

4. An assembly according to claim 3, in which the control valve is arranged in such a manner that when the thread (25) comes into abutment against the tapping (33) without being engaged therein, the sealing gaskets (14) do not yet bear against the sealing bearing surfaces (31) of the housing, but the centering bearing surfaces (13, 32) cooperate for centering the hydraulic control valve in the housing (6).

5. An assembly according to claim 4, in which, once the thread (25) is engaged in the tapping (33) and when the sealing gaskets (14) come into contact with the sealing bearing surfaces (31), the nut (11) is sufficiently engaged to be capable of exerting the force required to engage said gaskets against their respective bearing surfaces.

6. An assembly according to claim 3, in which the jacket (10) includes a collar (18) extending immediately in register with the nut (11) so as to pinched between said nut and a shoulder (36) of the housing (6) when the control valve is in place in the housing.

7. An assembly according to claim 3, in which the nut (11) carries a sealing gasket (20) disposed in the vicinity of the thread (25) and designed to bear against an inlet bearing surface (20') of the housing.

8. An assembly according to any one of claims 1 to 7, in which the body is a hydraulic manifolds (1) having hydraulic ports (2) associated with ducts (37) that open out into the chambers (35).

9. An assembly according to claim 8, in which the hydraulic control valve (5) and the associated housing (6) extend in the hydraulic manifold (1) in a first direction (Y), while the ducts (37) extend in a second direction (X) perpendicular to the first.

10. An assembly according to any one of claims 1 to 7, in which the body is a protective case (7) for the hydraulic control valve (5).

## Patentansprüche

1. Anordnung aus einem Hydraulikverteiler und einem Gehäuse (1,7), das mindestens eine offene Aufnahme (6) umfasst, die dazu bestimmt ist, mindestens einen Hydraulikverteiler (5) aufzunehmen, wobei der Hydraulikverteiler (5):
- Verteileröffnungen (15) und Verteilermittel (16, 17) umfasst, um die Verteileröffnungen (15) selektiv hydraulisch zu verbinden,
- eine allgemeine Form einer länglichen Kartusche hat, die dazu geeignet ist, auf herausnehmbare Weise in der Aufnahme (6) aufgenommen zu werden, derart, dass der Verteiler und die Aufnahme hydraulisch isolierte Kammern (35) festlegen, in die die Verteileröffnungen (15) des Hydraulikverteilers münden,
- in Längsrichtung beabstandete Dichtungen (14) trägt, die mit Dichtungsflächen (31) der Aufnahme zusammenwirken, wenn der Hydraulikverteiler in die genannte Aufnahme eingesetzt ist, wobei sich die Kammern (35) zwischen den Dichtungen erstrecken und wobei die Dichtungsflächen und die Dichtungen (31; 14) abgestufte Durchmesser haben, die von einer Einführungsöffnung der Aufnahme zu einem Boden der Aufnahme (6) abnehmen,
**dadurch gekennzeichnet, dass** der Verteiler ein Ende umfasst, mit dem er in die Aufnahme eingeführt wird und das eine Zentrierfläche (13) umfasst, die mit einer homologen Zentrierfläche (32) zusammenwirkt, die sich am Boden der Aufnahme (6) erstreckt, um den Hydraulikverteiler bei seinem Einsetzen in der Aufnahme zu zentrieren, wobei die genannten Zentrierflächen derart angeordnet sind, dass sie zusammenwirken, bevor die Dichtungen an den Dichtflächen anliegen.

2. Anordnung nach Anspruch 1, wobei der Hydraulikverteiler ein anderes Ende umfasst, das Befestigungsmittel (11) zum Befestigen des Hydraulikverteilers in der Aufnahme (6) des Gehäuses trägt.

3. Anordnung nach Anspruch 2, wobei die Befestigungsmittel eine Mutter (11) umfassen, die drehbar auf einer Buchse (10) des Hydraulikverteilers gelagert ist und ein Außengewinde (25) aufweist, das dazu geeignet ist, mit einem Innengewinde (33) zusammenzuwirken, das sich an der Einführungsöffnung der Aufnahme (6) erstreckt.

4. Anordnung nach Anspruch 3, wobei der Verteiler derart ausgebildet ist, dass, wenn das Außengewinde (25) an dem Innengewinde (33) anliegt, ohne mit diesem in Eingriff zu stehen, die Dichtungen (14) noch nicht an den Dichtflächen (31) der Aufnahme anliegen, sondern die Zentrierflächen (13, 32) zusammenwirken, um den Hydraulikverteiler in der Aufnahme (6) zu zentrieren.

5. Anordnung nach Anspruch 4, wobei, sobald das Außengewinde (25) mit dem Innengewinde (33) in Eingriff steht und wenn die Dichtungen (14) mit den Dichtflächen (31) in Kontakt kommen, die Mutter (11) ausreichend eingeschraubt ist, um die Auflagekraft der genannten Dichtungen auf deren jeweilige Flächen ausüben zu können.

6. Anordnung nach Anspruch 3, wobei die Buchse (10) einen Kragen (18) umfasst, der sich unmittelbar gegenüber der Mutter (11) erstreckt, derart, dass er zwischen der genannten Mutter und einer Schulter (36) der Aufnahme (6) eingeklemmt ist, wenn der Verteiler in die Aufnahme eingesetzt ist.

7. Anordnung nach Anspruch 3, wobei die Mutter (11) eine Dichtung (20) trägt, die nahe des Außengewindes (25) angeordnet und dazu bestimmt ist, an einer Eintrittsfläche (20') der Aufnahme anzuliegen.

8. Anordnung nach einem der Ansprüche 1 bis 7, wobei das Gehäuse ein Hydraulikblock (1) ist, der Hydrauliköffnungen (2) umfasst, die Leitungen (37) zugeordnet sind, die in die Kammern (35) münden.

9. Anordnung nach Anspruch 8, wobei sich der Hydraulikverteiler (5) und die dazugehörige Aufnahme (6) in den Hydraulikblock (1) in einer ersten Richtung (y) erstrecken, während sich die Leitungen (37) in einer zweiten Richtung (x) erstrecken, die senkrecht zur ersten ist.

10. Anordnung nach einem der Ansprüche 1 bis 7, wobei das Gehäuse eine Schutzhülle (7) des Hydraulikverteilers (5) ist.
